# FASCICULE DE BREVET EUROPEEN

(11) **EP 3 603 036 B1**
(45) Date de publication et mention de la délivrance du brevet: **04.11.2026**
(21) Numéro de dépôt: 18713683.3
(22) Date de dépôt: 29.03.2018
(51) Int. Cl.: H04M 1/02, G07F 19/00, H04M 1/22, G07F 7/08, H01H 13/83, H01H 13/02, G06Q 20/30, B29C 45/14, B29C 45/16, G06Q 20/20

(54) **CAPOT D'UN TERMINAL DE PAIEMENT ELECTRONIQUE ET TERMINAL DE PAIEMENT ELECTRONIQUE CORRESPONDANT**
ABDECKUNG EINES ELEKTRONISCHEN ZAHLUNGSTERMINALS UND ENTSPRECHENDES ELEKTRONISCHES ZAHLUNGSTERMINAL
COVER OF AN ELECTRONIC PAYMENT TERMINAL, AND CORRESPONDING ELECTRONIC PAYMENT TERMINAL

(30) Priorité: 31.03.2017 FR 1752771
(43) Date de publication de la demande: 05.02.2020
(73) Titulaire: Banks and Acquirers International Holding, 75015 Paris (FR)
(72) Inventeur: MABILLE, Gaetan, 26600 Crozes Hermitage (FR); COQUELET, Didier, 60540 Puiseux-Le-Hauberger (FR); NEVEU, Ludovic, 85180 Le Château-D'Olonne (FR); BALASSE, Johann, 92400 Courbevoie (FR)
(74) Mandataire: Germain Maureau
(86) Numéro de dépôt international: PCT/EP2018/058047
(87) Numéro de publication internationale: WO 2018/178222

(56) Documents cités:
- EP-A1- 3 018 887
- FR-A1- 2 913 843
- FR-A1- 3 018 239
- US-A1- 2009 231 248
- US-A1- 2013 076 649

## Description

### 1 DOMAINE TECHNIQUE

Le domaine de l'invention est celui de l'ergonomie et plus particulièrement du rétro-éclairage des terminaux de paiement électronique, ainsi que celui de la sécurisation physique de tels terminaux, en particulier au niveau de leur capot.

### 2 ARRLERE-PLAN TECHNOLOGIQUE

La fonctionnalité de rétro-éclairage d'un terminal de paiement permet à certaines zones du terminal, comme par exemple les touches du clavier, la fente d'insertion de la carte bancaire ou encore la zone dédiée au paiement sans contact, d'être éclairées par l'intérieur du terminal, afin d'être plus visibles pour l'utilisateur.

Le rétro-éclairage permet également la mise en œuvre d'indicateurs visuels informant l'utilisateur de l'activation d'une fonctionnalité, comme par exemple des points lumineux (fixes ou clignotants) pendant l'activation de la fonctionnalité de paiement sans contact.

Ces zones à rétro-éclairées sont donc par conséquent des zones ne devant pas être recouvertes par le capot du terminal, nécessairement opaque par ailleurs pour masquer et protéger l'intérieur du terminal, pour des raisons évidentes de sécurité.

Par ailleurs, le rétro-éclairage d'un terminal de paiement doit être conçu et mis en œuvre de manière à garantir la sécurisation et l'intégrité physique du terminal vis-à-vis d'attaques physiques extérieures.

En effet, il existe par exemple des attaques appelées « attaques par overlay » consistant à recouvrir une partie d'un terminal de paiement électronique avec un plastron, plus large que le capot authentique du terminal, afin de cacher des éléments frauduleux permettant d'accéder à des données sensibles transitant dans le terminal, ou permettant d'empêcher la libération de la carte à puce insérée (pour La récupérer plus tard)."

Ces attaques sont notamment possibles lorsqu'il existe une faille, si petite soit-elle, dans les moyens physiques de sécurisation du terminal, par exemple des endroits de fragilité entre deux éléments ou deux zones du capot, comme potentiellement les zones rétro-éclairées.

Ainsi, par exemple, certains terminaux de paiement électronique présentent des guides lumière permettant de guider la lumière fournie par une source lumineuse à l'intérieur du terminal (par exemple une ou plusieurs leds) vers la zone a rétro-éclairer, ces guides lumière passant au travers d'ouvertures du capot (pour le lecteur de carte sans contact par exemple) et constituant donc des points de fragilité et d'accès à l'intérieur du terminal de paiement électronique, et donc potentiellement des points d'attaque.

Une solution de l'art antérieur pour limiter ces fragilités consiste à réduire les dimensions des guides lumière, ou à limiter les zones rétro-éclairées. En revanche, un inconvénient de ces solutions réside dans une dégradation de l'ergonomie du terminal de paiement électronique.

Par ailleurs, le document US 2013/0076649 décrit une couche totalement transparente recouvrant une couche tactile d'un écran d'affichage. Le document US 2009/231248 décrit un capot de terminal formé d'une couche inférieure réfléchissante et totalement opaque et d'une couche supérieure semi-opaque ou translucide, délimitant un espace dans lequel est diffusée de la lumière émise par un réseau de leds.

Il existe donc un besoin pour une technique de rétro-éclairage d'un terminal de paiement électronique qui soit optimale en terme d'ergonomie pour l'utilisateur, tout en ne dégradant pas la sécurité physique du terminal.

Il existe également un besoin pour qu'une telle technique de rétro-éclairage présente un coût maitrisé et une mise en œuvre technique aisée.

### 3 RESUME

L'invention est telle que décrite dans la revendication 1, des modes de réalisation préférés étant décrits dans les revendications dépendantes 2 à 7.

L'invention propose un capot d'un terminal de paiement électronique présentant au moins une zone rétro-éclairée lorsqu'un rétro-éclairage est activé, le capot comprenant au moins une partie comprenant au moins une couche inférieure et une couche supérieure assemblées lors de la fabrication du capot. De plus, la couche inférieure est opaque ou semi-opaque et couche supérieure est translucide de manière à masquer des éléments qu'elle recouvre lorsqu'il n'y a pas de rétro-éclairage, et à laisser passer une lumière issue du rétro-éclairage. Selon l'invention, la couche inférieure présente au moins une ouverture permettant le rétro-éclairage, en regard de la au moins une zone rétro-éclairée lorsque le capot est assemblé sur le terminal de paiement électronique, et la couche supérieure recouvre la au moins une ouverture dans la couche inférieure.

Ainsi, l'invention propose une solution nouvelle et inventive du rétro-éclairage d'un terminal de paiement électronique, tout en garantissant l'intégrité physique du terminal.

Pour ce faire, l'invention prévoit, selon ses différents modes de réalisation, que le capot du terminal de paiement électronique soit constitué, au moins en partie, de deux couches superposées lors de la fabrication du capot, la couche inférieure étant opaque (ou semi-opaque) et présentant une ou plusieurs ouvertures en regard de la ou des zones à rétro-éclairer et la couche supérieure étant translucide et recouvrant au moins l'ouverture de la couche inférieure.

Ainsi, là où le capot pourrait présenter une fragilité par la ou les ouvertures pour permettre le rétro-éclairage, une couche supérieure transparente lui est ajoutée, permettant de laisser passer la lumière du rétro-éclairage, tout en fournissant une barrière physique au-dessus de la ou des ouvertures de la couche inférieure.

Ces deux couches étant assemblées lors de la fabrication du capot, cet assemblage ne présente aucune fragilité, y compris aux frontières de la ou des ouvertures de la couche inférieure, car ces deux couches ne peuvent être séparées sans détruire le capot lui-même. Ainsi, aucun élément espion ou frauduleux ne peut être inséré à l'endroit de l'ouverture de la couche inférieure, permettant un rétro-éclairage optimal. En effet, la zone à rétro-éclairer peut être très large car elle est entièrement recouverte de la couche supérieure transparente du capot.

Par ailleurs, cette solution rend très difficile une attaque par « overlay », qui dégraderait forcément l'aspect visuel, ainsi que le toucher et la dureté, de ces zones rétro-éclairées recouvertes d'une couche de matière transparente. Une telle attaque serait alors détectable à l'œil nu par un utilisateur, qui n'utiliserait pas le terminal de paiement électronique et alertait son propriétaire.

Enfin, la couche supérieure étant translucide, et non complètement transparente, elle permet le rétro-éclairage tout en empêchant la visibilité lorsque le terminal de paiement électronique n'est pas rétro-éclairé. En effet, une matière translucide masque, ou rend flou et sans contour, les éléments qu'elle recouvre si elle n'est pas éclairée mais laisse passer la lumière lorsqu'elle est éclairée comme dans le cas d'un rétro-éclairage d'un terminal de paiement électronique.

Selon un aspect particulier de l'invention, les couches inférieure et supérieure sont obtenues par une technique de fabrication du capot appartenant au groupe comprenant:
- le surmoulage de la couche supérieure sur la couche inférieure ;
- la bi-injection des couches inférieure et supérieure.

Ainsi, selon ce mode de réalisation particulier de l'invention, la technique de fabrication du capot permet de rendre les deux couches inséparables, sans toutefois que les matières ne se mélangent. Le capot présente alors une cohésion de surface, sans ouverture et donc sans faille qui pourrait remettre en cause l'intégrité physique du terminal de paiement électronique, contrairement à certaines solutions de l'art antérieur qui prévoit de coller, par l'extérieur, un plastron de protection n'offrant pas une telle sécurisation. En effet, avec ces solutions connues, il est possible d'enlever le plastron et de le remplacer par un plastron malveillant comme dans une attaque par overlay par exemple.

En particulier, la couche inférieure comprend du Polycarbonate ou du Polycarbonate/Acrylonitrile Butadiène Styrène.

Ainsi, selon ce mode de réalisation particulier de l'invention, la couche inférieure opaque est par exemple en PC/ABS (Polycarbonate/Acrylonitrile Butadiène Styrène), mélange de PC et d'ABS. En effet, ce mélange permet d'obtenir une alliant la haute transformabilité de l'ABS et les propriétés mécaniques, de résistance aux chocs et à la chaleur du PC, de manière à renforcer au maximum la qualité du capot du terminal de paiement électronique.

Selon une caractéristique particulière de la couche supérieure comprend de l'élastomère thermoplastique ou du polyuréthane thermoplastique.

Ainsi, selon ce mode de réalisation particulier de l'invention, la couche supérieure translucide est par exemple en polyuréthane thermoplastique, encore appelé TPU, matière appartenant au groupe des élastomères thermoplastiques (TPE ou élastomère thermoplastique à base de polyoléfine). Les performances des polyuréthanes thermoplastiques résident dans la combinaison de leurs bonnes propriétés physiques et chimiques.

Selon un aspect particulier de l'invention, la couche inférieure comprend une partie correspondant à une zone de réception d'un écran assemblé ultérieurement sur le capot du terminal de paiement électronique, non recouverte par la couche supérieure.

Selon un aspect particulier de l'invention, la couche inférieure et la couche supérieure présentent une ouverture pour accueillir un clavier.

L'invention concerne également un terminal de paiement électronique comprenant un capot tel que décrit précédemment.

### 4 LISTE DES FIGURES

D'autres caractéristiques et avantages de l'invention apparaîtront à la lecture de la description suivante, donnée à titre d'exemple indicatif et non limitatif, et des dessins annexés, dans lesquels:
- les figures 1a à 1f présentent différentes vues d'un capot de terminal de paiement électronique selon un mode de réalisation de l'invention ;
- la figure 2 illustre une vue en coupe d'une partie d'un capot d'un terminal de paiement électronique selon un mode de réalisation de l'invention ;
- la figure 3 présente une vue de face d'un terminal de paiement électronique comprenant un capot selon un mode de réalisation de l'invention.

### 5 DESCRIPTION DETAILLEE DE L'INVENTION

Sur toutes les figures du présent document, les éléments et étapes identiques sont désignés par une même référence.

Le principe général de l'invention consiste à envelopper (par un procédé connu de type surmoulage ou bi-injection) le capotage d'un terminal de paiement électronique par une matière thermoplastique translucide, ou légèrement transparente, en certains endroits du capotage, comme par exemple des zones prévues pour le rétro-éclairage. Ainsi, dans cette(s) zone(s) a rétro-éclairer, le capotage (classiquement opaque pour rendre invisible l'intérieur du terminal de paiement électronique) est ajouré, pour faire passer la lumière du rétro-éclairage, et recouvert par La deuxième couche de matière translucide, qui elle aussi laisse passer la lumière du rétro-éclairage.

Le résultat final donne un aspect extérieur uniforme, sans trou, et donc sans faille pour l'intégrité physique du capot du terminal de paiement électronique. En effet, grâce à la cohésion de surface entre les matières, obtenue au moment même de la fabrication du capot du terminal de paiement électronique, il n'est pas possible d'enlever la couche extérieure translucide. Ainsi, cette solution permet d'ajourer la partie opaque dans des zones spécifiques, La partie translucide recouvrant ces ouvertures pour éviter de donner accès à des fonctions sécurisées.

De plus, comme déjà indiqué précédemment, cette solution offre un aspect visuel particulier (au niveau de zones prévues pour être rétro-éclairées) à la fois opaque lorsque le rétro-éclairage n'est pas activé et transparent lorsqu'il est activé. Cet aspect visuel particulier est également accompagné d'un toucher spécifique, du fait de la couche supérieure translucide, et en particulier d'une dureté spécifique du capot du terminal de paiement électronique. Ces différents éléments différenciant ce capot d'un capot classique rendent donc très difficile une attaque par « overlay », qui dégraderait forcément l'aspect visuel et/ou le toucher et/ou la dureté de ces zones rétro-éclairées. Cette solution permet donc de mettre en œuvre des zones de rétro-éclairages optimales dans un terminal de paiement électronique, tout en garantissant l'intégrité physique de ce dernier.

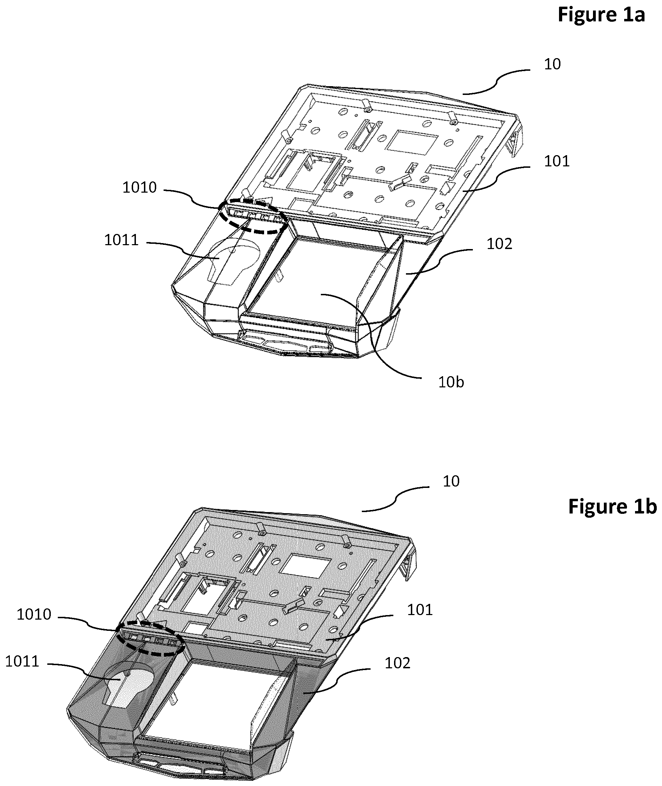

Les figures 1a à 1f présentent différentes vues d'un capot 10 d'un terminal de paiement électronique, selon un mode de réalisation de l'invention.

Selon ce mode de réalisation, le capot 10 comprend une première couche inférieure 101, présentant au moins deux zones d'ouvertures permettant un rétro-éclairage.

Une première zone d'ouverture 1010 présente par exemple quatre petites ouvertures correspondant à un indicateur d'activation de la fonctionnalité de paiement sans contact. Ainsi, lorsque le paiement sans contact est activé, quatre points lumineux apparaissent (provenant par exemple de leds de couleur verte activées en continu ou en alternance ou l'une à la suite de l'autre).

Une seconde ouverture 1011, plus large, correspond quant à elle au rétro-éclairage du logo de la fonctionnalité de paiement sans contact, qui s'éclaire (souvent via une led de couleur blanche) lorsque le paiement sans contact est activé, afin de guider l'utilisateur dans le positionnement de sa carte de paiement sans contact.

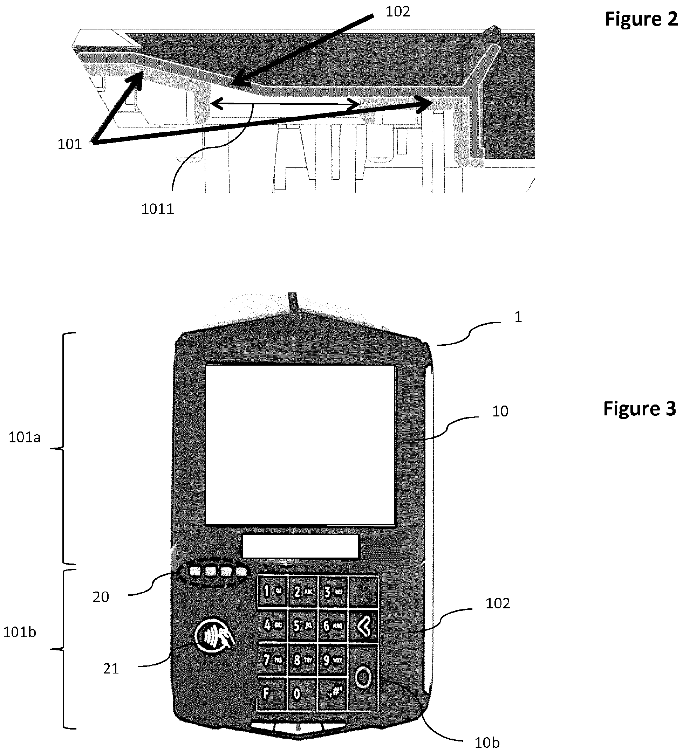

Ces deux zones d'ouvertures 1010 et 1011 correspondent par exemple respectivement aux deux zones de rétro-éclairage 20 et 21 visibles sur La figure 3 (illustrant une vue de face d'un terminal de paiement électronique).

Classiquement, le capotage d'un terminal de paiement électronique est formé par une matière opaque, afin de masquer l'intérieur du terminal de paiement électronique. Selon ce mode de réalisation, la couche inférieure 101 est donc opaque et constituée par exemple de PC/ABS (Polycarbonate/Acrylonitrile Butadiène Styrène), mélange de PC et d'ABS. Ainsi, cette couche inférieure 101 présente des qualités optimales en alliant celles de l'ABS (haute transformabilité par exemple) et celles du PC (excellentes propriétés mécaniques, de résistance aux chocs et à la chaleur par exemple).

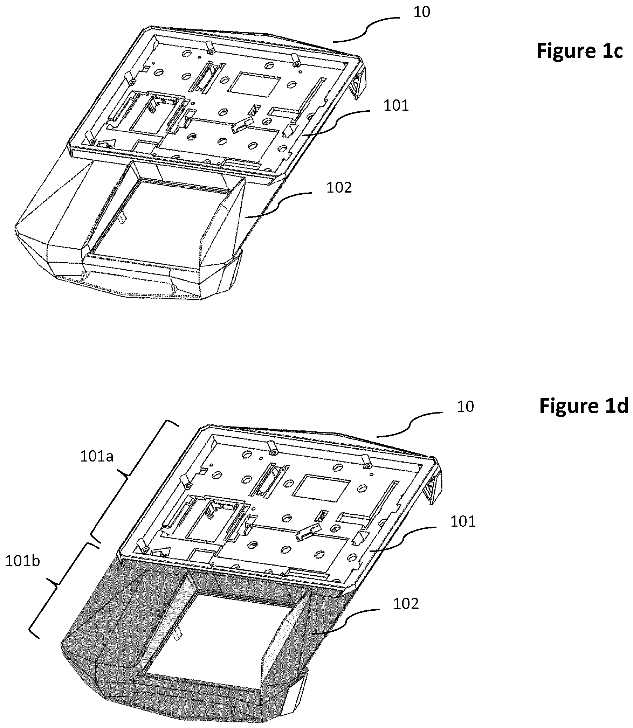

Par ailleurs, le capot 10 comprend également une couche supérieure 102, recouvrant une partie seulement de la couche inférieure 101 (ceci est plus visible sur la figure 1d par exemple) et en particulier la partie 101b de la couche inférieure 101 présentant les zones d'ouverture 1010 et 1011 destinées au rétro-éclairage. De plus, cette couche supérieure 102 est constituée d'une matière translucide (comme par exemple du polyuréthane thermoplastique, noté TPU par la suite) permettant d'une part de masquer les éléments qu'elle recouvre lorsqu'il n'y a pas de rétro-éclairage et d'autre part de laisser passer la lumière du rétro-éclairage.

Ceci est particulièrement illustré sur les figures la et 1b qui présentent cette couche supérieure 102 en transparence (comme en configuration de rétro-éclairage) par-dessus la couche inférieure 101, de manière à recouvrir, sans la masquer de manière opaque.

Par exemple, comme illustré en figure 1d, la partie 101a de la couche inférieure 101 qui n'est pas recouverte par la couche supérieure 102 correspond à une zone de réception d'un écran (comme illustré de manière plus visible sur La figure 3), assemblé ultérieurement sur le capot du terminal de paiement électronique, et ne nécessitant pas d'être recouvert par une couche de matière translucide.

On notera, sur la figure 1a, que les deux couches 101 et 102 du capot du terminal de paiement électronique présentent également une ouverture 10b, permettant par exemple d'accueillir un clavier (comme illustré de manière plus visible sur la figure 3) qui nécessite un accès au circuit imprimé pour des connexions électroniques.

Les figures 1c et 1d présentent quant à elles La couche supérieure 102 masquant une partie de la couche inférieure 101, comme en configuration où il n'y a pas de rétro-éclairage par exemple. On voit ainsi que les éléments de la couche inférieure 101, et en particulier les zones d'ouvertures 1010 et 1011, ne sont pas visibles sous la couche supérieure 102, lorsqu'elles ne sont pas rétro-éclairées. La matière translucide choisie pour la couche supérieure 102 permet donc de respecter le critère d'opacité du capot du terminal de paiement électronique en configuration non rétro-éclairée, tout en permettant au rétro-éclairage d'être mis en œuvre de manière sécurisée.

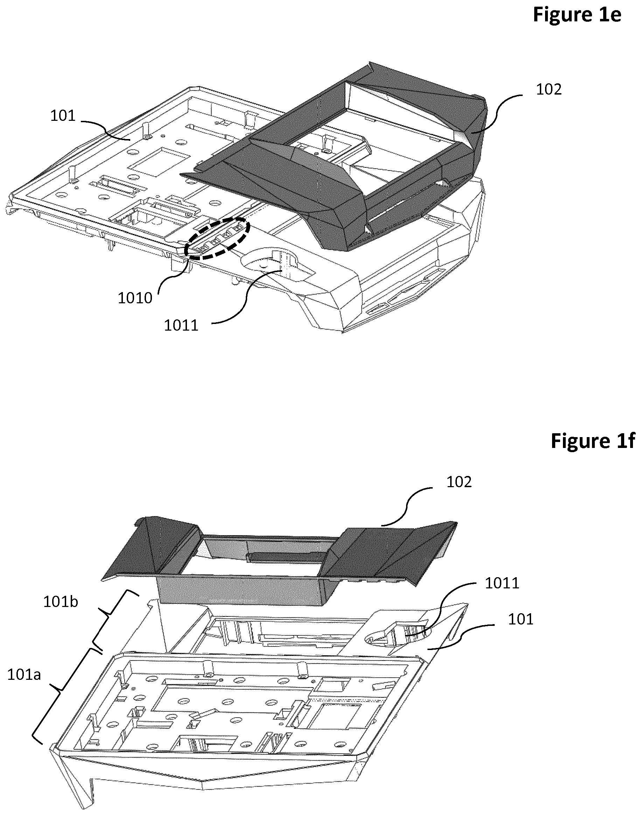

Les figures 1e et 1f présentent quant à elles deux vues en éclaté dans lesquelles la couche supérieure 102 est représentée en gris, au-dessus de la partie 101b de la couche inférieure 101 sur laquelle elle est assemblée lors de la fabrication du capot 10 du terminal de paiement électronique. Ces vues permettent également de bien Visualiser que les zones 1010 et 1011 prévues pour le rétro-éclairage sont recouvertes par la couche supérieure 102.

La figure 2 illustre quant à elle une vue en coupe d'une partie du capot 10 du terminal de paiement électronique, au niveau de la zone d'ouverture 1011 prévue pour le rétro-éclairage du logo de paiement sans contact.

Ainsi, on peut visualiser que cette zone 1011 correspond bien à une ouverture dans la couche inférieure 101 et que la couche supérieure 102 recouvre cette ouverture 1011, afin de protéger l'accès au terminal de paiement électronique.

Par exemple, selon une première variante de la fabrication du capot du terminal de paiement électronique, la couche translucide 102 (par exemple en TPU), vient recouvrir la couche opaque 101 grâce à un procédé de bi-injection. Cela permet de créer une cohésion, et non un mélange, entre les matières pour ne faire qu'une pièce constituant le capot du terminal de paiement électronique, tout en permettant la mise en œuvre optimale de zones rétro-éclairées. En effet, les zones d'ouvertures dans la couche opaque du capot étant recouvertes par la couche translucide, de manière homogène et inviolable du fait de La fabrication elle-même, peuvent être de grande taille si nécessaire et de toute forme.

Selon une deuxième variante de la fabrication du capot du terminal de paiement électronique, la couche translucide 102 vient recouvrir la couche opaque 101 grâce à un procédé de surmoulage, permettant dans le cas présent d'obtenir une protection de la couche inférieure opaque par une couche supérieure translucide. Les mêmes avantages que ceux obtenus par le procédé de bi-injection sont obtenus par ce procédé de surmoulage.

De ce fait, tout autre procédé de fabrication présentant les mêmes avantages peut bien sûr être utilisé, comme par exemple un procédé de bi-injection ou de surmoulage en utilisant de l'ABS translucide, du caoutchouc de silicone (ou silicon rubber) ou du LSR (Liquid Silicon Rubber).

Enfin, La figure 3 présente une vue de face d'un terminal de paiement électronique 1 selon ce mode de réalisation.

Comme déjà indiqué ci-dessus, le capot 10 du terminal de paiement électronique 1 présente une première partie 101a destinée en particulier à recevoir l'écran et une deuxième partie 101b destinée au clavier (zone 10b) ainsi qu'à la fonctionnalité de paiement sans contact, illustrée plus particulièrement par deux zones de rétro-éclairage 20 et 21. C'est cette partie 101b qui est recouverte par la couche supérieure 102 translucide, afin de pouvoir mettre en œuvre ce rétro-éclairage de manière optimale et sécurisée.

Selon d'autres modes de réalisation, La couche inférieure du capot du terminal de paiement électronique peut être entièrement recouverte d'une couche supérieure translucide, afin d'obtenir les mêmes effets que ceux décrits en relation avec le mode de réalisation décrit ci-dessus.

Enfin, d'autres zones de rétro-éclairage que celles décrites ci-dessus peuvent être prévues dans le terminal de paiement électronique, et recouvertes de la couche supérieure translucide, selon les mêmes principes que le mode de réalisation décrit précédemment.

## Revendications

1. Capot (10) d'un terminal de paiement électronique (1) présentant au moins une zone rétro-éclairée (20, 21) lorsqu'un rétro-éclairage est activé,
le capot (10) comprenant au moins une partie (101b) comprenant au moins une couche inférieure (101) et une couche supérieure (102) assemblées lors de la fabrication du capot (10),
la couche inférieure (101) étant opaque ou semi-opaque et la couche supérieure (102) étant translucide de manière à masquer des éléments qu'elle recouvre lorsqu'il n'y a pas de rétro-éclairage, et à laisser passer une lumière issue du rétro-éclairage,
**caractérisé en ce que** la couche inférieure présente au moins une ouverture (1010, 1011) permettant le rétro-éclairage, en regard de ladite au moins une zone rétro-éclairée (20, 21) lorsque le capot (10) est assemblé sur le terminal de paiement électronique (1), et la couche supérieure (102) recouvre ladite au moins une ouverture (1010, 1011) dans la couche inférieure (101).

2. Capot d'un terminal de paiement électronique selon la revendication 1, **caractérisé en ce que** les couches inférieure (101) et supérieure (102) sont obtenues par une technique de fabrication du capot appartenant au groupe comprenant:
• le surmoulage de la couche supérieure sur la couche inférieure ;
• La bi-injection des couches inférieure et supérieure.

3. Capot d'un terminal de paiement électronique selon l'une des revendications 1 et 2, **caractérisé en ce que** la couche inférieure (101) comprend du Polycarbonate ou du Polycarbonate/Acrylonitrile Butadiène Styrène.

4. Capot d'un terminal de paiement électronique selon l'une des revendications 1 à 3, **caractérisé en ce que** la couche supérieure (102) comprend de l'élastomère thermoplastique ou du polyuréthane thermoplastique.

5. Capot d'un terminal de paiement électronique selon l'une des revendications 1 à 4, **caractérisé en ce que** la couche inférieure (101) comprend une partie (101a) correspondant à une zone de réception d'un écran assemblé ultérieurement sur le capot du terminal de paiement électronique, non recouverte par la couche supérieure (102).

6. Capot d'un terminal de paiement électronique selon l'une des revendications 1 à 5, **caractérisé en ce que** la couche inférieure (101) et la couche supérieure (102) présentent une ouverture (10b) pour accueillir un clavier.

7. Terminal de paiement électronique comprenant un capot selon l'une quelconque des revendications 1 à 7.

## Patentansprüche

1. Abdeckung (10) eines elektronischen Zahlungsterminals (1), die mindestens einen hintergrundbeleuchteten Bereich (20, 21) aufweist, wenn eine Hintergrundbeleuchtung aktiviert ist,
wobei die Abdeckung (10) mindestens einen Teil (101b) umfasst, der mindestens eine untere Schicht (101) und eine obere Schicht (102) umfasst, die bei der Herstellung der Abdeckung (10) zusammengefügt werden,
wobei die untere Schicht (101) undurchsichtig oder halbdurchsichtig ist und die obere Schicht (102) durchscheinend ist, so dass Elemente, die sie abdeckt, wenn keine Hintergrundbeleuchtung vorhanden ist, verdeckt werden und Licht von der Hintergrundbeleuchtung durchgelassen wird,
**dadurch gekennzeichnet, dass** die untere Schicht gegenüber dem mindestens einen hintergrundbeleuchteten Bereich (20, 21), wenn die Abdeckung (10) auf dem elektronischen Zahlungsterminal (1) montiert ist, mindestens eine Öffnung (1010, 1011) aufweist, die die Hintergrundbeleuchtung ermöglicht, und die obere Schicht (102) die mindestens eine Öffnung (1010, 1011) in der unteren Schicht (101) abdeckt.

2. Abdeckung eines elektronischen Zahlungsterminals nach Anspruch 1, **dadurch gekennzeichnet, dass** die untere (101) und die obere (102) Schicht durch eine Technik zur Herstellung der Abdeckung erhalten werden, die zur Gruppe gehört, umfassend:
• Umspritzen der oberen Schicht auf die untere Schicht;
• Zweikomponenten-Spritzgießen der unteren und der oberen Schicht.

3. Abdeckung eines elektronischen Zahlungsterminals nach einem der Ansprüche 1 und 2, **dadurch gekennzeichnet, dass** die untere Schicht (101) Polycarbonat oder Polycarbonat/Acrylnitril-Butadien-Styrol umfasst.

4. Abdeckung eines elektronischen Zahlungsterminals nach einem der Ansprüche 1 bis 3, **dadurch gekennzeichnet, dass** die obere Schicht (102) thermoplastisches Elastomer oder thermoplastisches Polyurethan umfasst.

5. Abdeckung eines elektronischen Zahlungsterminals nach einem der Ansprüche 1 bis 4, **dadurch gekennzeichnet, dass** die untere Schicht (101) einen Teil (101a) umfasst, der einem Aufnahmebereich für einen später an der Abdeckung des elektronischen Zahlungsterminals montierten Bildschirms entspricht und nicht von der oberen Schicht (102) abgedeckt ist.

6. Abdeckung eines elektronischen Zahlungsterminals nach einem der Ansprüche 1 bis 5, **dadurch gekennzeichnet, dass** die untere Schicht (101) und die obere Schicht (102) eine Öffnung (10b) zur Aufnahme einer Tastatur aufweisen.

7. Elektronisches Zahlungsterminal, das eine Abdeckung nach einem der Ansprüche 1 bis 7 umfasst.

## Claims

1. A cover (10) of an electronic payment terminal (1) having at least one backlit area (20, 21) when backlighting is activated,
the cover (10) comprising at least one part (101b) comprising at least one lower layer (101) and an upper layer (102) assembled during the manufacture of the cover (10),
the lower layer (101) being opaque or semi-opaque and the upper layer (102) being translucent so as to conceal elements it covers when there is no backlighting, and to allow light from the backlighting to pass through,
**characterized in that** the lower layer has at least one opening (1010, 1011) allowing backlighting, facing said at least one backlit area (20, 21) when the cover (10) is assembled on the electronic payment terminal (1), and the upper layer (102) covers said at least one opening (1010, 1011) in the lower layer (101).

2. The cover of an electronic payment terminal according to claim 1, **characterized in that** the lower layer (101) and the upper layer (102) are obtained by a technique for manufacturing the cover belonging to the group comprising:
• overmolding of the upper layer onto the lower layer;
• bi-injection of the lower and upper layers.

3. The cover of an electronic payment terminal according to any of claims 1 and 2, **characterized in that** the lower layer (101) comprises Polycarbonate or Polycarbonate/Acrylonitrile Butadiene Styrene.

4. The cover of an electronic payment terminal according to any of claims 1 to 3, **characterized in that** the upper layer (102) comprises thermoplastic elastomer or thermoplastic polyurethane.

5. The cover of an electronic payment terminal according to any of claims 1 to 4, **characterized in that** the lower layer (101) comprises a part (101a) which corresponds to an area for receiving a screen subsequently assembled on the cover of the electronic payment terminal and which is not covered by the upper layer (102).

6. The cover of an electronic payment terminal according to any of claims 1 to 5, **characterized in that** the lower layer (101) and the upper layer (102) have an opening (10b) to accommodate a keypad.

7. An electronic payment terminal comprising a cover according to any one of claims 1 to 7.
